# EUROPEAN PATENT SPECIFICATION

(11) **EP 0 188 328 B1**
(45) Date of publication and mention of the grant of the patent: **26.01.1994**
(21) Application number: 86300097.2
(22) Date of filing: 08.01.1986
(51) Int. Cl.: C08G 69/28, C08G 69/48

(54) **Polyamide resin and its production**
Polyamidharz und seine Herstellung
Résine polyamide et sa production

(30) Priority: 14.01.1985 JP 4557/85
(43) Date of publication of application: 23.07.1986
(73) Proprietor: MITSUBISHI KASEI CORPORATION, Tokyo 100 (JP)
(72) Inventor: Kohyama, Katsuhisa, Kitakyushu-shi Fukuoka-ken (JP); Miyamoto, Masaaki, Kitakyushu-shi Fukuoka-ken (JP); Nakanishi, Hidemi, Kitakyushu-shi Fukuoka-ken (JP); Koga, Norimichi, Onga-gun Fukuoka-ken (JP)
(74) Representative: Lawrence, Peter Robin Broughton

(56) References cited:
- CH-A- 389 240
- DD-B- 5 007
- FR-A- 896 242
- GB-A- 897 624
- GB-A- 2 103 868
- GB-A- 2 134 123
- US-A- 2 948 698
- US-A- 3 578 640
- US-A- 3 819 758
- H Bennet "Concise Chem. and Tech. Dictionary", page 555

## Description

Polyamide resins are made by polycondensation and, due to their mechanical properties and mouldability, are widely used as engineering plastics.

Various methods are known for preparing polyamides. DD-B-5007 describes preparation of polyamides from diamines and dicarboxylic acids.

US-A-3,578,640 describes production of polyamides for forming fibres having improved tensile properties and dyeability. The polyamides are produced from caprolactam and either an amine or a carboxylic acid chain terminator is included in the reaction mixture.

GB-A-2134123 relates to the formation of polyamides from lactams using molecular weight controllers which can be chosen from mono-functional primary amines, amino acids and acetic or other low carbon number monofunctional organic acids.

However it would be desirable to improve the properties of polyamide resins for engineering plastics including their bending resistance and tensile strength at low temperatures, and also to improve their melt fluidity and mould releasability.

According to a first aspect of the invention a process for producing a polyamide resin from a lactam, the polyamide for use in injection moulding having a relative viscosity of 2.5 to 6 when measured on a 1% solution in 98% H₂SO₄ at 25°C, and in which 50 to 92% of the end groups of the resin are substituted by C₆₋₂₂ hydrocarbon groups comprises the steps of subjecting the starting materials for producing a polyamide to polycondensation, and subjecting the thus obtained polycondensate to condensation with (1) a monocarboxylic acid of from 7 to 23 carbon atoms and a monoamine having a C₆₋₂₂ hydrocarbon group; (2) a monocarboxylic acid of from 7 to 23 carbon atoms and a diamine of from 2 to 22 carbon atoms;or (3) a monoamine having a C₆₋₂₂ hydrocarbon group and a dicarboxylic acid of from 3 to 24 carbon atoms, under a pressure of lower than 53200 Pa (400 Torr).

According to a second aspect of the invention a process for producing a polyamide resin from a lactam, the polyamide for use in injection moulding having a relative viscosity of 2.5 to 6 and in which 50 to 92% of the end groups of the resin are substituted by C₆₋₂₂ hydrocarbon groups comprises the step of subjecting the starting materials for producing a polyamide to polycondensation in the presence of (1) a monocarboxylic acid of from 7 to 23 carbon atoms and a monoamine having a C₆₋₂₂ hydrocarbon group (2) a monocarboxylic acid of from 7 to 23 carbon atoms and a diamine of from 2 to 22 carbon atoms or (3) a monoamine having a C₆₋₂₂ hydrocarbon group and a dicarboxylic acid of from 3 to 24 carbon atoms, under a pressure of lower than 53200 Pa (400 Torr) in the final stage of the polycondensation.

The invention also comprises the products of the novel processes and uses of these products in moulding processes.

Polyamide resins are obtained by polycondensation of compounds providing appropriate carboxylic acid and amine groups. In the present invention the resins are obtained by polycondensation (or copolymerisation) of a lactam having not less than three members ring.

Suitable lactams are ε-caprolactam, enantolactam, capryl lactam, lauryl lactam, α-pyrrolidone and a-piperidone.

Suitable C₆₋₂₂ hydrocarbon end groups for use in the present invention include aliphatic hydrocarbon groups such as hexyl, heptyl, octyl, 2-ethylhexyl, nonyl, decyl, undecyl, dodecyl, tridecyl, tetradecly, tetradecylene, pentadecyl, hexadecyl, heptadecyl, octadecyl, octadecylene, eicosyl and docosyl, alicyclic hydrocarbon groups, such as cyclohexyl, methylcyclohexyl and cyclohexylmethyl, and aromatic hydrocarbon groups such as phenyl, toluyl, benzyl and b-phenylethyl.

These hydrocarbon groups are incorporated into the resin as at least 50% of the end groups of the resin. Any remaining end groups are provided by, for instance, amino groups and carboxyl groups derived from the other starting material from which the polyamide is made.

The hydrocarbon end group content of the polyamide is measured by gas chromatography after hydrolysing the polyamide with hydrochloric acid. The amino end group content of the polyamide is measured by dissolving the present polyamide in phenol and titrating thereof with an aqueous 0.05 N hydrochloric acid solution. The carboxyl end group content of the polyamide is measured by dissolving the polyamide in benzyl alcohol and titrating the thus obtained solution by an aqueous 0.1N sodium hydroxide solution. The total number of end groups is the sum of the respective numbers of the hydrocarbon groups, amino end groups and carboxyl end groups.

In the novel polyamide, the number of the hydrocarbon end groups is 50 to 92% of the total number of the end groups. If the amount is less than 40% it leads to undesirable reduction of the fluidity of the molten polyamide resin and of the bending resistance and the tensile strength of the polyamide. Although it is desirable to have the number of the hydrocarbon groups of the present polyamide in the vicinity of 100% of the total number of the end groups from the view point of the physical properties of the present polyamide, the production of such a polyamide may be difficult and so the amount of the hydrocarbon groups should be in the range of 50 to 92%.

The relative viscosity of the novel polyamide measured in 98% sulfuric acid at a concentration of 1% by weight and at 25°C by using the method of Japanese Industrial Standard (JIS) K 6810 is in the range of 2.5 to 6, preferably 2.5 to 5.

If the relative viscosity is below 2.5 the resistance to fatigue of the polyamide may be unsatisfactory and if the relative viscosity is higher than 6 the polyamide may have poor fluidity in molten state.

The novel polyamides may be made, as mentioned above, using certain monocarboxylic acids and/or monoamines.

As the monocarboxylic acid of 7-23 carbon atoms, there may be used aliphatic monocarboxylic acids such as enanthic acid, caprylic acid, capric acid, pelargonic acid, undecanoic acid, lauric acid, tridecanoic acid, myristic acid, myristoleinic acid, palmitic acid, stearic acid, oleic acid, linolic acid, arachic acid and behenic acid; alicyclic monocarboxylic acids such as cyclohexanecarboxylic acid and methylcyclohexanecarboxylic acid; and aromatic monocarboxylic acids such as benzoic acid, toluic acid, ethylbenzoic acid and phenylacetic acid. The acid may be introduced in the form of a derivative which can play the same role as the free acid during the reaction. For instance, acid anhydrides, esters and amides may be used.

As the monoamine having a C₆₋₂₂ hydrocarbon group, there may be used aliphatic monoamines such as hexylamine, heptylamine, octylamine, 2-ethylhexylamine, nonylamine, decylamine, undecylamine, dodecylamine, tridecylamine, tetradeclyamine, pentadecylamine, hexadecylamine, octadecylamine, octadecyleneamine, eicosylamine and docosylamine, alicyclic monoamines such as cyclohexylamine and methylcyclohexylamine; and aromatic monoamines such as benzylamine and β-phenylethylamine. The amines are generally primary amines.

The hydrocarbon end groups preferably have at least 14, often 14-18, carbon atoms. If necessary, diamine of from 2 to 22 carbon atoms, dicarboxylic acid of from 3 to 24 carbon atoms, monocarboxylic acid of not more than 6 carbon atoms (such as acetic acid or propionic acid) and/or monoamine of not more than 5 carbon atoms (such as methylamine or ethylamine) may be used together with the above-mentioned monocarboxylic acid of 7-23 carbon atoms and/or monoamine having a C₆₋₂₂ hydrocarbon group.

As the diamines of from 2 to 22 carbon atoms, there may be used aliphatic diamines such as ethylenediamine, trimethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, hexadecamethylenediamine, octadecamethylenediamine and 2,2,4- or 2,4,4-trimethyl-hexamethylenediamine; alicyclic diamines such as cyclohexanediamine, methylcyclohexanediamine and bis(4,4'-aminocyclohexyl)methane; and aromatic diamines such as xylylenediamine.

As the dicarboxylic acid of from 3 to 24 carbon atoms, there may be used aliphatic dicarboxylic acids such as malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, hexadecanedioic acid, hexadecenedioic acid, octadecanedioic acid, octadecenedioic acid, eicosanedioic acid, eicosenedioic acid, docosanedioic acid and 2,2,4-trimethyladipic acid; alicyclic decarboxylic acids such as 1,4-cyclohexanedicarboxylic acid; and aromatic decarboxylic acids such as terephthalic acid, isophthalic acid, phthalic acid and xylylenedicarboxylic acid.

The polycondensation reaction may be initiated while using the above-mentioned starting materials and following a usual method (refer to USP 2,241,322, USP 2,241,323 and USP 2,071,250), and the above-mentioned carboxylic acid(s) and amine(s) may be added at the optional stage during the time from the initiation of the reaction to the time when the reation under a reduced pressure is initiated. The carboxylic acid(s) and the amine(s) may be added together or separately.

The amounts of the carboxylic acid(s) and the amine(s) used in the reaction generally corresponds to 20 to 60 µeq, preferably 25 to 55 µeq (1-10 meq, preferably 2-8 meq) of carboxylic groups and amino groups per one gram (one mol) of the total amount of the starting materials used for the present polyamide, respectively.

If the amount of the carboxylic acid and the amine is too small, it is not possible to produce the polyamide resin exhibiting the effects of the present invention, and if the amount is too large it is not possible to produce the polyamide of a high viscosity, and the physical properties of the resin become less satisfactory.

The novel polyamide is substituted by the hydrocarbon end groups, and has a relative viscosity higher than 2.5. In order to produce such a resin, it is necessary to carry out the reaction in the final stage of the reaction under a pressure of not higher than 53200 Pa (400 Torr), preferably, not higher than 39900 Pa (300 Torr), more preferably not higher than 26600 Pa (200 Torr). If pressure in the final reaction stage is over 53200 Pa (400 Torr), it is impossible to obtain the stated relative viscosity. Pressures lower than 53200 (400 Torr) are satisfactory. The reaction under the above reduced pressure may be carried out for longer than 0.5 hour, usually from 1 to 2 hours. If postcondensation is being used to introduce the end groups, this is preferably conducted at the reduced pressure.

The novel polyamide has excellent mechanical properties, particularly in bending resistance and tensile strength at a low temperature, and also excellent fluidity at a molten state and mould releasability.

Accordingly, the polyamide can be moulded into three-dimentional moulded articles, containers, films, sheets, tubes and filaments suitable for use as the material elements for motorcars, aeroplanes, ships, electric- and electronic apparata and other industrial goods by various well-known methods of moulding such as injection moulding, extrusion moulding, and compression moulding, etc.

Further, by blending the polyamide resin of the present invention with other resins such as polyamide resin other than the present polyamide, polyester resin, polycarbonate resin, polyacetal resin, polyolefin-series resin, polystyrene-series resin and the like, a resin composition having improved physical properties can be obtained.

The following are non-limitative examples and a comparative example.

### Examples 1 to 4

After introducing, into a 200-litre autoclave, 60 kg of ε-caprolactam, 1.2 kg of water and both stearic acid and octadecylamine in the respective amounts shown in Table 1, the autoclave was tightly closed under an atmosphere of gaseous nitrogen, and was heated to 260°C to carry out the reaction for 2 hours under a pressure while stirring the content of the autoclave. Thereafter, the pressure of the autoclave was decreased to the value shown in Table 1, and the reaction was further continued for 2 hours under the reduced pressure.

After introducing gaseous nitrogen into the autoclave to bring the inner pressure of the autoclave to atmospheric, the stirring was stopped, and the reaction product was taken out in a strand state and chipped. The chipped product was treated with boiling water to extract and remove the unreacted monomer therefrom, and the thus treated-product was dried.

Test pieces of the product for tensile and bending tests were prepared by moulding in a 0.10kg (3.6-ounce) injection-moulding machine (made by TOSHIBA Kikai Co.Ltd., Model: IS-75S) the thus obtained chipped product at a resin (chipped product) temperature of 250°C using a metal mould 10 mm in length, 10 mm in width and 2 mm in thickness and having a temperature of 80°C. The injection time was 5 sec, the cooling time 10 sec, and the total cycle time 18 sec.

The fluidity of the resin when molten state was represented by the injection pressure at the time of injection.

The tensile test was carried out by stretching 20 test pieces at a temperature of -10°C under the instant tensile stress of 2.45 x 10⁶Pa (5 kgW applied across the 20 mm² cross-sectional area of the test piece) and counting the number of broken test pieces in the 20 test pieces thus treated.

The bending test was carried out by bending 20 test pieces to an angle of 180° at a temperature of -10°C and counting the number of broken pieces in the 20 test pieces thus treated.

The mould releasibility of the present polyamide was determined by the following procedures.

Continuous injection moulding of the present polyamide was carried out under a chipped resin temperature of 250°C, a metal mould temperature of 80°C, an injection time of 5 sec, a cooling time of 12 sec and a total cycle time of 20 sec while using the metal mould which can form a lattice having the ribs of 5 mm x 4 mm at an interval of 15 mm in a frame of 80 mm square. The number of shots for injection was counted until the release of the moulded polyamide resin from the mould began to deteriorate. Mould releasability was classified by the following criteria and indices:

| Index | Criterion |
|---|---|
| A | Continuous injection could be carried out more than 25 shots. |
| B | Mould release began to deteriorate between the 10th shot and the 25th shot. |
| C | Mould release began to deteriorate before the 10th shot. |

The thus obtained results of physical and chemical properties of the test pieces in Examples 1 to 4 are shown in Table 1.

### Comparative Example

For comparison, a polyamide was produced in the same manner as in Example 1 except for not using both stearic acid and octadecylamine and using acetic acid in an amount corresponding to 10 micro-equivalent of carboxyl group per one gram of the starting materials of the polyamide. The test results are shown also in Table 1.

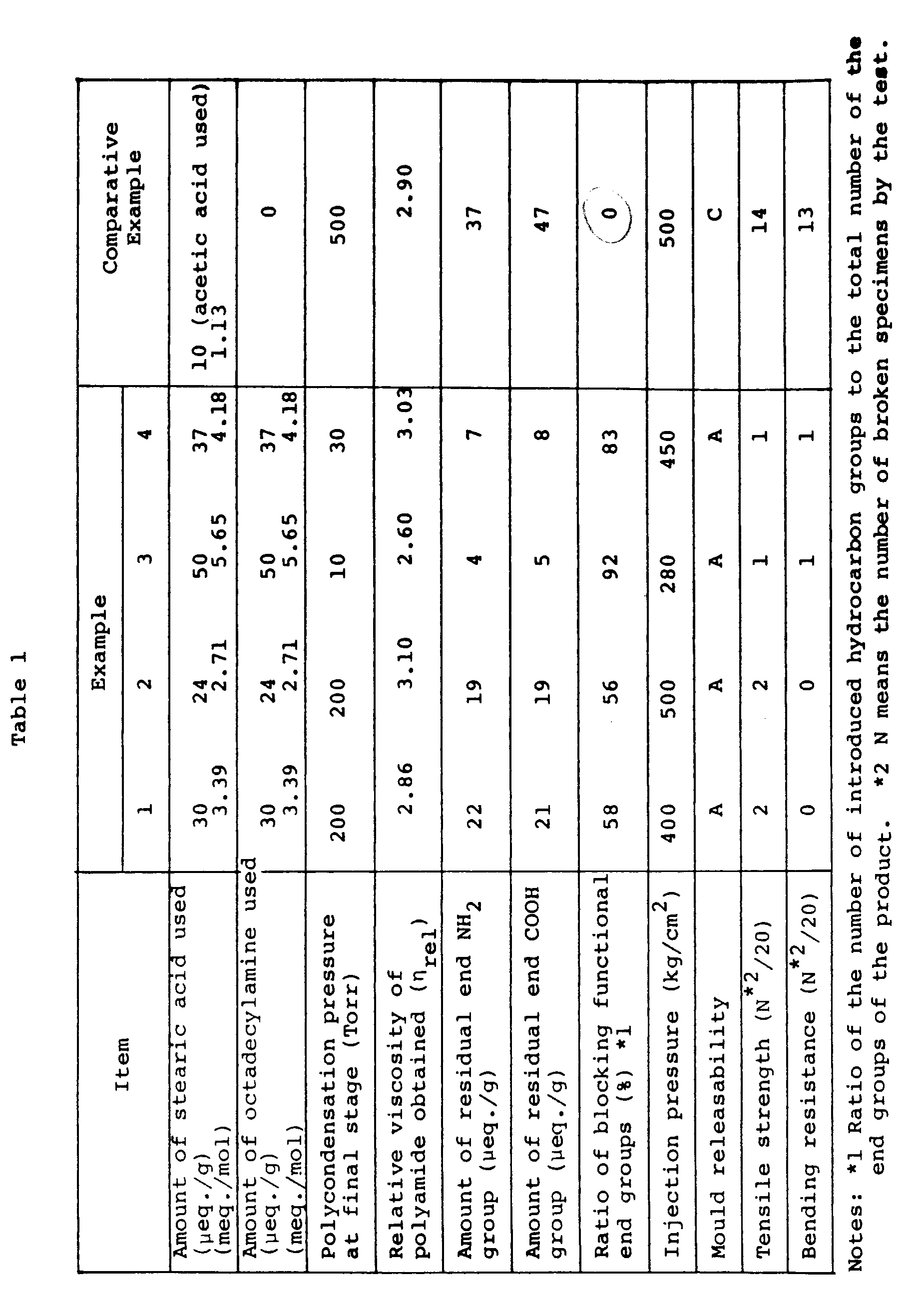

### Example 5

After introducing 60 kg of ε-caprolactam, 1.2 kg of water, 1.024 g (0.68 mol%) of stearic acid and 209 g (0.34 mol%) of hexamethylenediamine into an autoclave of a capacity or 200 litres, the content of the autoclave was treated by the same procedures as in Example 1 to produce a polyamide. The results are shown in Table 2.

### Example 6

After introducing 60 kg of ε-caprolactam, 1.2 kg of water, 775 g (0.54 mol%) of octadecylamine and 170 g (0.27 mol%) of adipic acid into an autoclave of a capacity of 200 litres, the content of the autoclave was treated by the same procedures as in Example 1 to produce a polyamide. The results are also shown in Table 2.

The thus obtained two polyamides in Examples 5 and 6, respectively showed the same excellent properties concerning mould releasability, fluidity in the molten state and resistance to fatigue as those of the polyamides obtained in Examples 1 to 4.

The results of testing those in Example 6 were also shown in Table 2.

**TABLE 2**

| Item | Example 5 | Example 6 |
|---|---|---|
| Amount of carboxylic acid | stearic acid | adipic acid |
| (µeq./g) | 60 | 48 |
| (meq./mol) | 6.78 | 5.42 |
| Amount of amine | hexamethylenediamine | octadecylamine |
| (µeq./g) | 60 | 48 |
| (meq./mol) | 6.78 | 5.42 |
| Polycondensation pressure at final stage (Torr) | 200 | 200 |
| Relative viscosity of polyamide obtained (ηᵣₑₗ) | 2.90 | 3.10 |
| Amount of residual end NH₂ group (µeq./g) | 22 | 20 |
| Amount of residual end COOH group (µeq./g) | 22 | 21 |
| Ratio of blocking functional end groups (%) *1 | 58 | 54 |
| Injection pressure (kg/cm²) | 420 | 500 |
| Mould releasability | A | A |
| Tensile strength (N*²/20) | 2 | 2 |
| Bending resistance (N*²/20) | 0 | 0 |

| | | |
|---|---|---|
| Note: *1 and *2 are the same as defined in Table 1. | | |

## Claims

1. A process for producing a polyamide resin from a lactam having not less than three membered ring, the polyamide for use in injection moulding having hydrocarbon groups of 6 to 22 carbon atoms as end groups of said polyamide and showing a relative viscosity of from 2.5 to 6 when measured on a 1% solution in 98% H₂SO₄ at 25°C, the number of said hydrocarbon group being 50 to 92% of total number of end groups of said polyamide, comprising the steps of subjecting the starting materials for producing a polyamide to polycondensation, and subjecting the thus obtained polycondensate to condensation with (1) a monocarboxylic acid of from 7 to 23 carbon atoms and a monoamine having a C₆₋₂₂ hydrocarbon group; (2) a monocarboxylic acid of from 7 to 23 carbon atoms a diamine of from 2 to 22 carbon atoms; or (3) a monoamine having a C₆₋₂₂ hydrocarbon group and a dicarboxylic acid of from 3 to 24 carbon atoms, under a pressure of lower than 53200 Pa (400 Torr).

2. A process for producing a polyamide resin from a lactam having not less than three membered ring, the polyamide for use in injection moulding having hydrocarbon groups of 6 to 22 carbon atoms as end groups of said polyamide and showing a relative viscosity of from 2.5 to 6 when measured on a 1% solution in 98% H₂SO₄, at 25°C, the number of said hydrocarbon groups being 50 to 92% of total number of end groups of said polyamide, comprising the step of subjecting the starting materials for producing the polyamide to polycondensation in the presence of (1) a monocarboxylic acid of from 7 to 23 carbon atoms and a monoamine having a C₆₋₂₂ hydrocarbon group; (2) a monocarboxylic acid of from 7 to 23 carbon atoms and a diamine of from 2 to 22 carbon atoms; or (3) a monoamine having a C₆₋₂₂ hydrocarbon group and a dicarboxylic acid of from 3 to 24 carbon atoms, under a pressure of lower than 53200 Pa (400 Torr) in the final stage of the polycondensation.

3. A process according to any preceding claim in which the resin has a relative viscosity of 2.5 to 5.

4. A process according to any preceding claim in which the said hydrocarbon groups have 14 to 18 carbon atoms.

5. A process according to any preceding claim in which the final stage of the polycondensation is effected at a pressure below 39900 Pa (300 Torr).

6. A process according to any preceding claim in which the amount of said monoamine, diamine, monocarboxylic and dicarboxylic respectively acid introduced from 20 to 60 µeq of carboxylic and amino group per gram of the total amount of the starting materials for producing the polyamide.

7. Use of a polyamide resin that has been produced by a process according any preceding claim in a moulding process, for instance selected from injection moulding, extrusion moulding and compression moulding, optionally after blending the polyamide resin with other resins.

## Patentansprüche

1. Verfahren zur Herstellung eines Polyamidharzes aus einem Lactam mit nicht weniger als drei Ringgliedern, wobei das Polyamid für die Verwendung beim Injektionsformen Kohlenwasserstoffgruppen mit 6 bis 22 Kohlenstoffatomen als Endgruppen des Polyamids aufweist und eine relative Viskosität von 2,5 bis 6 bei Messung mit einer 1 %-igen Lösung in 98 % H₂SO₄ bei 25°C aufweist, und wobei die Zahl der Kohlenwasserstoffgruppen bei 50 bis 92 % der Gesamtzahl der Endgruppen des Polyamids liegt, das die Schritte des Polykondensierens der Ausgangsmaterialien zur Herstellung eines Polyamids und des Kondensierens des so erhaltenen Polykondensats mit
(1) einer Monocarbonsäure mit 7 bis 23 Kohlenstoffatomen und einem Monoamin mit einer C₆₋₂₂-Kohlenwasserstoffgruppe,
(2) einer Monocarbonsäure mit 7 bis 23 Kohlenstoffatomen und einem Diamin mit 2 bis 22 Kohlenstoffatomen; oder
(3) einem Monoamin mit einer C₆₋₂₂-Kohlenwasserstoffgruppe und einer Dicarbonsäure mit 3 bis 24 Kohlenstoffatomen unter einem Druck von weniger als 53200 Pa (400 Torr) umfaßt.

2. Verfahren zur Herstellung eines Polyamidharzes aus einem Lactam mit nicht weniger als drei Ringgliedern, wobei das Polyamid für die Verwendung beim Injektionsformen Kohlenwasserstoffgruppen mit 6 bis 22 Kohlenstoffatomen als Endgruppen des Polyamids aufweist und eine relative Viskosität von 2,5 bis 6 bei Messung einer 1 %-igen Lösung in 98 % H₂SO₄ bei 25°C zeigt, wobei die Zahl der Kohlenwasserstoffgruppen 50 bis 92 % der Gesamtzahl der Endgruppen des Polyamids beträgt, das den Schritt des Kondensierens der Ausgangsmaterialien zur Herstellung des Polyamids in Gegenwart
(1) einer Monocarbonsäure mit 7 bis 23 Kohlenstoffatomen und eines Monoamins mit einer C₆₋₂₂-Kohlenwasserstoffgruppe;
(2) einer Monocarbonsäure mit 7 bis 23 Kohlenstoffatomen und einem Diamin mit 2 bis 22 Kohlenstoffatomen; oder
(3) einem Monoamin mit einer C₆₋₂₂-Kohlenwasserstoffgruppe und einer Dicarbonsäure mit 3 bis 24 Kohlenstoffatomen unter einem Druck von weniger als 53200 Pa (400 Torr) im Endstadium der Polykondensation umfaßt.

3. Verfahren nach einem der vorhergehenden Ansprüche, wobei das Harz eine relative Viskosität von 2,5 bis 5 aufweist.

4. Verfahren nach einem der vorhergehenden Ansprüche, wobei die Kohlenwasserstoffgruppen 14 bis 18 Kohlenstoffatome aufweisen.

5. Verfahren nach einem der vorhergehenden Ansprüche, wobei das Endstadium der Polykondensation bei einem Druck unterhalb von 39900 Pa (300 Torr) durchgeführt wird.

6. Verfahren nach einem der vorhergehenden Ansprüche, bei dem die Menge des Monoamins, Diamins, der Monocarbonsäure und der Dicarbonsäure 20 bis 60 µeq an Carboxyl- und Aminogruppen pro Gramm der Gesamtmenge der Ausgangsmaterialien für die Herstellung des Polyamids beträgt.

7. Verwendung eines Polyamidharzes, das gemäß einem Verfahren gemäß einem der vorhergehenden Ansprüche hergestellt wurde, in einem Formverfahren, z.B. ausgewählt aus Injektionsformen, Extrudierformen und Kompressionsformen, gegebenfalls nach Vermischung des Polyamidharzes mit anderen Harzen.

## Revendications

1. Procédé pour la production d'une résine de polyamide à partir d'un lactame dont le cycle n'a pas moins que trois membres, le polyamide, pour utilisation dans le moulage par injection, ayant des radicaux hydrocarbonés de 6 à 22 atomes de carbone comme groupes terminaux du polyamide et présentant une viscosité relative de 2,5 à 6, mesurée sur une solution à 1% dans du H₂SO₄ 98% à 25°C, le nombre des radicaux hydrocarbonés étant de 50 à 92% du nombre total de groupes terminaux du polyamide, le procédé comprenant les étapes de polycondensation des matériaux de départ pour produire le polyamide, et de condensation du polycondensat ainsi obtenu avec (1) un monoacide carboxylique de 7 à 23 atomes de carbone et une monoamine ayant un radical hydrocarboné en C₆₋₂₂, (2) un monoacide carboxylique de 7 à 23 atomes de carbone et une diamine de 2 à 22 atomes de carbone, ou (3) une monoamine ayant un radical hydrocarboné en C₆₋₂₂ et un diacide carboxylique de 3 à 24 atomes de carbone, sous une pression inférieure à 53 200 Pa (400 torrs).

2. Procédé pour la production d'une résine de polyamide à partir d'un lactame dont le cycle n'a pas moins que trois membres, le polyamide, pour utilisation dans le moulage par injection, ayant des radicaux hydrocarbonés de 6 à 22 atomes de carbone comme groupes terminaux du polyamide et présentant une viscosité relative de 2,5 à 6, mesurée sur une solution à 1% dans du H₂SO₄ 98% à 25°C, le nombre des radicaux hydrocarbonés étant de 50 à 92% du nombre total de groupes terminaux du polyamide, le procédé comprenant l'étape de polycondensation des matériaux de départ pour produire le polyamide, en présence (1) d'un monoacide carboxylique de 7 à 23 atomes de carbone et d'une monoamine ayant un radical hydrocarboné en C₆₋₂₂, (2) d'un monoacide carboxylique de 7 à 23 atomes de carbone et d'une diamine de 2 à 22 atomes de carbone, ou (3) d'une monoamine ayant un radical hydrocarboné en C₆₋₂₂ et d'un diacide carboxylique de 3 à 24 atomes de carbone, sous une pression inférieure à 53 200 Pa (400 Torr) dans l'étape finale de la polycondensation.

3. Procédé suivant l'une quelconque des revendications précédentes, dans lequel la résine a une viscosité relative de 2,5 à 5.

4. Procédé suivant l'une quelconque des revendications précédentes, dans lequel les radicaux hydrocarbonés ont 14 à 18 atomes de carbone.

5. Procédé suivant l'une quelconque des revendications précédentes, dans lequel l'étape finale de polycondensation est réalisée à une pression inférieure à 39 900 Pa (300 torrs).

6. Procédé suivant l'une quelconque des revendications précédentes, dans lequel la quantité introduite de monoamine, de diamine, de monoacide et de diacide carboxylique respectivement est de 20 à 60 µéq. de radicaux carboxyliques et amino par gramme de la quantité totale des matières de départ pour produire le polyamide.

7. Utilisation d'une résine de polyamide qui a été produite par un procédé suivant l'une quelconque des revendications précédentes, dans un procédé de moulage, par exemple choisie parmi le moulage par injection, le moulage par extrusion et le moulage par compression, facultativement après mélange de la résine de polyamide avec d'autres résines.
